# EUROPEAN PATENT APPLICATION

(11) **EP 2 630 872 A1**
(43) Date of publication of application: **28.08.2013**
(21) Application number: 13156053.4
(22) Date of filing: 20.02.2013
(51) Int. Cl.: A23L 1/212, A23L 1/214, A23L 1/216

(54) **Improved food product and method for its manufacture**

(30) Priority: 21.02.2012 GB 201202954
(71) Applicant: KP Snacks Limited, Hayes Middlesex UB4 8EE (GB)
(72) Inventor: Clow, Andrew Edward Crispian, Buckinghamshire, HP13 5JX (GB); Flannery, Rita Yvonne, Derbyshire, DE11 7AE (GB); Spence, Julie Ann, West Midlands, B90 4UW (GB)
(74) Representative: Humphreys, Ceris Anne

(57) **Abstract**

A snack product comprises a potato crisp having an exterior surface defining within it a matrix, there being at least one flavouring component distributed within the matrix, the potato crisp having a moisture content of not more than 2.5 weight percent. In one illustrative process for making the snack product, a raw potato is cut to obtain potato pieces, the potato pieces are contacted with a water-based flavouring blend to obtain flavour-containing pieces, and flavour-containing pieces are cooked such that their moisture content is reduced to 2.5% by weight or less.

## Description

The invention relates to food products and their manufacture. More particularly, the invention relates to flavoured food products made from potatoes and to methods for the manufacture thereof.

Potatoes are a versatile vegetable used widely in the snack food industry. For the avoidance of doubt, the term "potato" as used herein does not include "sweet potatoes" *(Ipomoea batatas)* which botanically are related only remotely to the potato family. Food products made from pieces of potato are known in many different forms. Snack products made from pieces of potato are extremely popular with consumers. One of the most widespread potato snack products is potato crisps. Typically potato crisps are made by cutting slices from peeled raw potatoes, washing the cut slices, frying the slices in hot oil to a moisture content of 3% or less, usually 2% or less, and applying a flavouring to the fried slices. The slices may be planar slices. Slices which are non-planar may offer various advantages. For example, corrugated potato crisps provide attractive variations in product appearance and texture. The corrugated configuration also allows a thicker crisp to be made by virtue of the fact that the corrugations may permit the breakage characteristics in the mouth of the resultant ridged crisps to be better than those of a planar crisp of the same thickness.

The application of flavouring may be carried out in a variety of ways. In one method, a powdered flavouring is dusted onto the surfaces of the fried slices, the powder particles becoming attached to the residual frying oil on surfaces of the slices. In another method, the fried slices, after leaving the fryer, are tumbled with an oil-based suspension of flavouring which becomes attached to the surfaces of the slices. In yet further methods, a first application of flavouring may be applied in an oil-based suspension whilst thereafter additional flavouring is applied by dusting the slices with flavouring in powder form. Traditional fried potato crisps may have a fat content of from 30 to 40% by weight.

In recent years, there has been an increasing demand for snack products which offer attractive organoleptic properties resembling those of fried snacks, whilst having a lower fat content. Fat contents have been reduced by a variety of methods. For example, the frying step may be partly replaced by a baking step. Some fat is, however, generally necessary to give the product the desired texture and flavour. Typically, the fat content of such "reduced fat" crisps will be less than 30%, for example from 15 to 30%.

There is a continuing need for improved flavoured snack products.

The invention provides a snack product comprising a potato crisp, the potato crisp having an exterior surface defining within it a matrix and further comprising at least one flavouring component distributed within the matrix, the potato crisp having a moisture content of not more than 2.5% by weight.

In certain preferred snack products of the invention, the snack product further comprises at least one colourant distributed within the matrix of the snack product.

The snack product of the invention has at least one flavouring component and optionally at least one colourant distributed at least partly within the matrix of the product. Because flavouring is located within the product, rather than being present merely on the surface as in the prior art, the invention can provide increased fullness and depth of flavour and/or colour in crisps prepared from fresh potatoes, without increasing the final product fat content, as compared with an equivalent product flavoured by conventional dust-on means alone. This may also permit a longer duration of perceived flavour on eating, by virtue of the fact that the flavouring is present more integrally and/or more deeply within the structure of the crisp. Flavouring components that may optionally be present on the surface of the product will be perceived immediately, whereas flavouring components distributed within the matrix in accordance with the invention will be perceived more on biting and chewing, generating a delayed-release and to some extent controlled, or gradual, release of the flavor.

The flavouring component(s), and/or the colourant if present, may be distributed through the entirety of the matrix. In many embodiments, however, the flavouring component(s), and/or the colourant if present, will be distributed non-uniformly within the matrix of the product. In a particularly advantageous embodiment, the flavouring component(s), and/or the colourant if present, are preferentially distributed within a circumferential layer of the matrix, and a core portion enclosed by said circumferential layer comprises a lower concentration of, or is devoid of, the flavouring component(s), and/or the colourant if present. Advantageously, the flavouring component is distributed through at least 10 % by volume of the matrix. Preferably from 15 to 90% by volume, especially 20 to 80% by volume of the matrix includes the distributed flavouring component. A non-uniform distribution through the matrix may in particular be advantageous in embodiments in which colourants are present. In that case a stronger colour in an outer portion of the product may simulate the appearance of browning of the kind that may appear in snack products during high-temperature cooking, especially frying. A degree of browning is generally considered to be attractive. Since it is now known, however, that undesirable formation of acrylamide often occurs under conditions that favour the browning process, the incorporation of colourant in accordance with the invention allows a desirable colour to be generated even where cooking conditions are not such as to generate browning per se. For example, the product may resemble a product which is fried or baked at the normal temperature to produce colour even though it may have been processed at a lower temperature and thereby may benefit from a lower acrylamide content than an equivalent product fried or baked at the normal temperature. In some cases flavourings used may be coloured as such. For some flavourings which are not coloured as such or which are not coloured sufficiently to provide the desired degree or shade of colour in the finished product, it may be advantageous to add one or more colourants to the flavouring blend.

The presence of flavouring component(s), and colourant if present, within the matrix may be visualized by microscopic examination. In the case of water-soluble flavouring components that are not visible under normal optical microscopes, the distribution may be determined by using labeling compounds that generate visible colour in the presence of the component to be visualized, by using alternative visualization techniques under which the flavouring component can be detected or by simulating the product using an equivalent material which is optically visible.

Advantageously the snack product is a savoury snack product. The snack product may be a fried snack product, which may possess an intensity and depth of flavour (and optionally colour) not achievable by conventional methods of dust-on flavouring after frying, and without the increase in fat content that would result from use of conventional flavour in oil slurry or a flavoured oil either by itself or in combination with a dust-on flavour. When fried, the fat content of the snack product may be, for example, from 20 to 40% by weight based on the total weight of the product.

The snack product may instead be a baked snack product, for example a baked crisp. In that case, the invention allows flavour to be imparted without the need to add fat, hence keeping the overall product fat content very low, although the use of post-cooking flavour application, with or without the use of oil is also possible to apply additional flavouring to the exterior surface of such products.When cooked by methods other than frying, the fat content of the snack product may be, for example, lower than 20% by weight based on the total weight of the product.

The snack product has a moisture content of not more than 2.5%, more preferably not more than 2% by weight based on the total weight of the snack product, and in each case more preferably also based on the weight of the snack product excluding any surface adhered material applied after cooking.

The crisp may be of any configuration, including planar or any suitable non-planar configurations. In some embodiments, the snack product is a corrugated snack product, especially a corrugated potato crisp.

Advantageously, the snack product comprises a flavouring adhered to the external surface. The flavouring adhered to the external surface may if desired comprise the same flavouring component or components as distributed within the matrix. It may be preferred, however, that the at least one flavouring component adhered to the external surface is a different flavouring component, that is, the flavouring adhered to the external surface advantageously comprises a flavouring blend comprising one or more flavouring components that are not present in the matrix of the product. That allows novel and innovative combinations of flavours to be delivered by the product.

The invention also provides a process for making a flavoured snack product, comprising cutting a raw potato to obtain potato pieces, contacting the potato pieces with a water-based flavouring blend to obtain flavour-containing pieces, and cooking the flavour-containing pieces such that their moisture content is reduced to 2.5% or less.

The potato pieces may be contacted with the water-based flavouring blend by any method that permits the uptake of flavouring components from the solution into the potato pieces. Suitable contacting methods include, without limitation, immersing the pieces within the water-based flavouring blend, tumbling the pieces with the water-based flavouring blend, spraying or drenching the pieces with the water-based flavouring blend, or dripping the water-based flavouring blend onto the pieces.

The water-based flavouring blend may contain one or more flavouring components. The term "flavouring component" is used herein to include flavouring substances per se and flavouring preparations. "Flavouring substance" as used herein means a chemically defined substance with flavouring properties. In the context of this specification "flavouring preparations" are not chemically defined substances but complex mixtures having flavouring properties, the composition of the mixtures being defined by natural raw materials. Flavouring preparations are typically preparations obtainable from plant, animal or microbiological source materials by means of physical or biotechnological production processes, illustrative examples being vegetable and fruit extracts, spice and herb extracts, yeast extract, and essential oils, such as clove and eucalyptus oil. The oils are obtained from plants, such as spices, herbs, fruit or blossoms, and represent the odoriferous and/or tasty "essence" of the plant. Whilst one or more flavouring substances may be present in a flavouring preparation, the flavouring properties of flavouring preparations are typically not attributable to a specific isolatable flavouring substance but are generally characteristic of the mixture as a whole.

Preferably the water-based flavouring blend comprises a solution comprising at least one water-soluble flavouring component, water and optionally one or more further ingredients. A wide range of flavouring components may be used in the snack product and process of the invention. Suitable flavouring components include non-natural flavouring substances, which may be present as such or as part of a flavouring blend comprising the flavouring substance in admixture with one or more carriers and/or other additives. Other suitable flavouring components include natural flavouring substances and natural flavouring preparations which in each case are not naturally present in the potato from which the snack is made. The natural flavouring substances or natural flavouring preparations may be present as such or may be present in admixture with other ingredients (for example, one or more ingredients selected from one or more carriers, one or more non-natural flavouring substance and/or preparation, and other additives) in a flavouring blend. Illustrative water-soluble flavouring components include, for example, yeast extract or sucrose. If desired, a flavouring blend may contain one or more flavouring substance and one or more flavouring preparation. Illustrative of flavouring components that are water-insoluble or poorly soluble in water are for example dairy powders, herbs, spices. The selection of flavouring components will be dependent upon the desired flavour of the snack product and will be a routine matter for those skilled in the art. Optionally, the water-based flavouring blend comprises one or more water-insoluble flavouring components in the form of dispersed particles. In some embodiments the water-based flavouring blend comprises both water-soluble flavouring components in solution and dispersed water-insoluble flavouring components.

In practice, the water-based flavouring blend will advantageously comprise, as flavouring substance(s), at least one organic compound, and frequently a mixture of organic compounds.

Other substances that may be present in addition to flavouring components include colourants, especially water-soluble colourants, salt, flavour enhancers, and native starch. Ingredients other than flavouring components may be selected having regard to the nature of the flavouring component(s) to be present in the water-based flavouring blend, for example, such ingredients may serve as carriers for flavouring components, or enhance the flavour of flavouring components. Once again the selection of such other ingredients is a matter of routine for the person skilled in the art.

The term "flavouring component" as used herein is to be understood as excluding salt. It will be appreciated that the term "flavouring component" also excludes flavoured substances which are inherently present in the potato from which the snack product is made. Notwithstanding that the term "flavouring component" is to be understood as excluding salt, flavourings present in the product may optionally include salt in addition to flavouring components. In practice, where an additional, for example dust-on, flavouring is used, it may be necessary to limit the amount of sodium in the marinade such that the level of sodium in the finished product once the dust-on flavour has been applied remains within desired limits. It may be possible to reduce the sodium levels in both the marinade and the dust-on flavour, as compared with conventional snack product flavourings, to achieve the required sodium level in the finished product. In such cases, as compared with conventional flavoured snack products, the products may have a higher content of flavouring components without increasing the sodium content.

Some ingredients may influence the texture of the final product. Such ingredients may be present for a different purpose, for example as a flavouring component, the effect on texture being incidental, or may be added to the flavouring blend with the primary objective of influencing product texture.

Where a flavouring is applied after cooking, any suitable form of flavouring may be used, including conventional dust-on or flavour-in-oil slurry flavourings.

It may be desirable in practice to include in the water-based flavouring blend a 'marker' to enable the concentration of the marinade to be monitored to allow for concentration losses arising from, for example, dilution with water carried over on slices from the wash process. It will also typically be necessary in a dipping system to allow for replacement of flavouring blend taken up by the potato pieces. The dilution effect may be countered by dosing a concentrated version of the marinade into the marinating tank/ vessel, in order to keep the overall concentration in the marinade tank as consistent as possible. However, this may result in the level/volume of the marinade dropping. If this is the case, then a combination of topping up with water and with the marinade concentrate may be necessary to maintain both the concentration and the volume in the marinating tank.

Where present the marker required to monitor concentration may be a substance present in the flavouring solution or a substance added specifically for use as a marker. For example, conductivity measurement provides a simple and effective method for monitoring the concentration of soluble ionic substances in the marinade (eg sodium or potassium chloride salts if present). However, if conductive components are absent or at a low level, other suitable markers may be used.

Preferably, the potato pieces are subjected to a washing step using an aqueous wash fluid before being contacted with the water-based flavouring blend. The aqueous wash fluid, preferably water, is advantageously at a temperature of at least 40°C, preferably at least 50°C, and more preferably at least 60°C, in each case advantageously not exceeding 90°C and preferably not exceeding 85°C. For example, a wash temperature of 70°C may be used. The pieces may in addition or instead be subjected to a cold aqueous wash, for example at 5 to 30°C. Where both a cold wash and an elevated temperature wash are used, the cold wash will preferably precede the elevated temperature wash. In some circumstances it may be advantageous to use, as well as or instead of a water wash, an acidic or alkaline aqueous wash for washing the pieces prior to being contacted with the water-based flavouring blend.

The potato pieces are advantageously slices. The slices may be planar slices having opposed substantially parallel cut surfaces. In certain advantageous embodiments, the slices may be corrugated slices having opposed corrugated surfaces. In general, each corrugated surface is made up of a multiplicity of parallel, alternate, peaks and troughs, the pitch (that is, the distance between the tops of adjacent peaks and the distance between the bottoms of adjacent troughs) being uniform. In many corrugated crisp products, the corrugations on one side of the slice are parallel to the corrugations on the opposed side of the slice and are so arranged relative thereto that the peaks on one side correspond with the troughs on the opposed side resulting in a wave-like cross-section in a plane perpendicular to the corrugations. The invention is of advantageous application to corrugated potato slices in which the corrugations on the opposed cut surfaces have corrugations of equal pitch, whilst the corrugations on one surface are slightly offset relative to the corrugations on the other surface. That results in the slice having a cross-section of wave-like configuration in which each peak is located between a first, thicker web portion and a second, thinner web portion. The use of such an offset corrugated configuration in a crisp according to the invention, optionally in combination with washing the slices at elevated temperature before cooking, enables a thick-cut crisp to be made with a characteristic texture distinguishable from that of thinner corrugated or planar products and a more intense and/or longer-lasting flavour experience. Other non-planar configurations are also possible, for example crisps with other corrugated configurations in which the ridges are of curved or truncated shape or crisps with other, non-corrugated, surface patterns, and crisps with one planar surface and one non-planar surface. In the case of thick-cut crisps, including thick planar crisps or non-planar crisps which are thick per se or have thick portions as a result of the imposed configuration, the ratio of surface to volume is smaller than that of an equivalent thin-cut crisp, and thus in order to generate the same amount of flavour per unit volume or per unit weight of the slice, a larger amount of surface flavour would be required. Thick potato crisps include, for example, planar crisps with a thickness not less than 75, or even not less than 90 thousandths of an inch (1.9mm) or corrugated crisps which have at least some portions with thickness of not less than 90 thousandths of an inch (1.9mm). The incorporation of flavouring in accordance with the process of the invention in thick crisps is particularly advantageous because the flavour is directly associated with the matrix of the crisp so that the flavour experience continues to be generated during chewing of the crisp rather than solely on initial bite and during the first few seconds of chewing. Also, as a result of the fact that some of the flavour is locked into the crisp matrix rather than being adhered to the surface, there is reduced wastage resulting from flavour fall off during the conveying and packing processes.

The use of an aqueous pre-washing step, especially one at elevated temperature, is believed to enhance the uptake of flavouring components into the pieces, thereby increasing the concentration and extent of dispersement of the flavouring components within the matrix of the resultant snack product. It is believed that the enhancement of uptake of the flavouring component may be attributable at least in part to the softening and/or swelling of cell walls and destruction of the cell membrane in the potato pieces. It is thought that insoluble particulate flavouring component may in this way be taken up into, and trapped within, pores or interstitial spaces within the pieces.

It may in some embodiments be possible to make a crisp using aqueous marinating alone (i.e.contacting a potato slice with a water-based flavouring blend before cooking without adding after cooking any additional flavouring, for example, dust-on flavouring) and this would have the advantage of eliminating (or virtually eliminating) flavour fall off during the conveying and packing processes thereby reducing or eliminating associated downtime and waste. It would also minimise the flavour deposits that consumers normally get on their fingers when eating conventionally flavoured crisps.

Where a dust-on flavouring is to be applied as well as the flavouring within the matrix of the product, it will be desirable to select the flavouring blend to be used for the matrix having regard to the additional flavouring or flavourings that may be used on the external surface. In practice, when multiple flavour lines are made in a crisp factory, the stream of crisps produced after frying may be divided and directed to different flavouring stations dispensing different flavourings. Each flavouring station can be used to make a different dust-on flavour variant, and in this way multi-pack variants can easily be made in line, without the need for complex and inefficient 'lay-asiding'. The addition of a marinade having strong and specific flavour tones in a tank prior to the fryer, treating 100% of slices going through that fryer, may limit the types of dust-on flavours that could then be used in combination with the marinated base. In such circumstances it is anticipated that use of a marinade of a more generic kind may be used. A more generic marinade, for example a water-based flavouring blend that delivers an umami characteristic, may give an advantage in flavour delivery in the resulting product but still allow a wider range of dust-on or flavour-in-oil slurry flavours, for example two or more meaty flavours selected from beef-type flavours and chicken type flavours, to be used in combination with it at respective flavouring stations permitting different flavoured products to be made in parallel.

Certain embodiments of the invention will be described below by way of illustrative Examples, and with reference to the accompanying drawings in which:

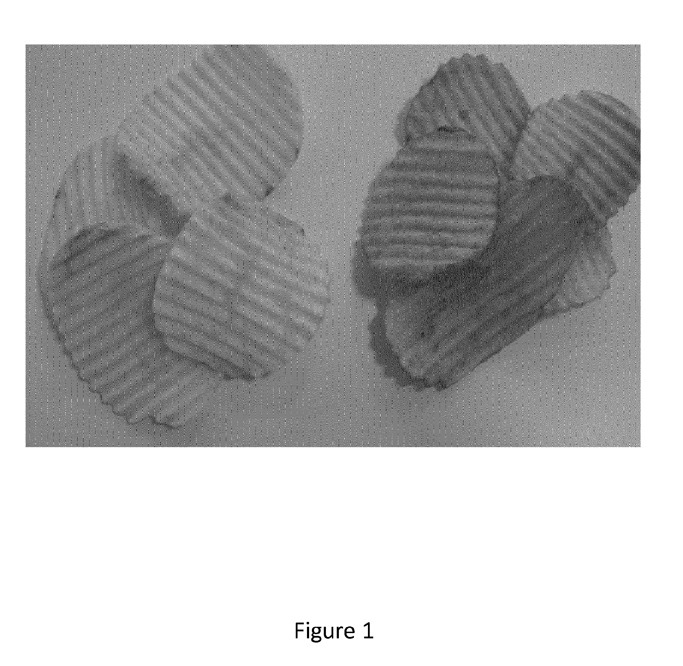

Fig. 1 is a photographic image of crisps made without marination (on the left) and crisps made with marination in accordance with the invention.

### Example 1

A flavour dip/ marinade was prepared by dispersing in water 15% w/v of a conventional barbeque flavouring in the form of a dust-on powder conventionally used for external dusting onto snack products post-frying. Potato slices were cut from Saturna potatoes using a corrugated cutter, having a corrugated configuration with symmetrical peaks/troughs and a uniform peak-to-peak distance of 212 thousandths of an inch (5.4mm). Each side of the slice was cut with the same cutter blade. The peak height, as measured from a notional plane containing the base of the troughs to a notional plane containing the top of the peaks, was 84 thousandths of an inch (2.13mm) The slices were cut with the corrugations on the first surface extending parallel to those on the second surface. However, when cutting the second surface, the cutter was set in a position slightly offset (by about 35 thousandths of an inch(0.9mm)) from the position of cutting the first surface whereby the peaks extending along each surface are so located that they extend parallel to and generally, but not quite exactly, opposed to the troughs on the other surface. The overall thickness of the slice is considered in the case of the corrugated slices to be the distance from the outer extremity of the first side of the slice (defined by a notional plane containing the peaks protruding on the first side of the slice) to the outer extremity of the second (opposed) side of the slice (defined by a notional plane containing the peaks protruding from the second side of the slice). The successive cutter blades were set such that slices were cut with an overall thickness of 170 thousandths of an inch (4.3 mm), as measured from the notional plane containing the peaks on the first surface to the notional plane containing the peaks on the second surface. The slices were cold-washed in cold water, then hot-washed for 2 minutes in water at 70°C. Slices were then dipped briefly (approx 5 - 15 seconds) into the flavour dip/marinade.

The marinade, which contained a combination of water-soluble and water-insoluble (suspended) components, was stirred frequently to maintain an even dispersion of suspended particles. The marinated slices were then placed into the basket of a batch fryer (a Pitco Frialator) and fried for approx 4 minutes in oil that started at approx 185°C and dropped by the end of the 4 minutes to approx 170°C. The finished moisture content was about 1.8% by weight based on the total weight of the fried slice after excess oil had been drained. A dust-on seasoning (meaty flavour) was then applied to the fried pieces in an amount of 5.5% based on the total weight of the fried pieces after flavouring. The resulting product had an appealing uniform light brown colour suggestive of darker meats such as medium well-done steak. The intensity and depth of flavour in this product was considered to be greater than what is achieved in the corresponding product flavoured with 5.5% dusted-on meaty flavour alone.

### Example 2

Further samples were prepared for sensory analysis as follows -
1. Standard (un-marinated) crisps base alone.
2. Marinated (barbeque beef) crisps base alone.
3. Standard (un-marinated) crisps base to which dust-on meaty-flavoured flavouring has been applied in an amount of 5.5% by weight based on the total weight of the fried crisps after application of the flavouring.
4. Marinated (barbeque beef) crisps base to which dust-on meaty-flavoured flavouring has been applied in an amount of 5.5% by weight based on the total weight of the fried crisps after application of the flavouring.

Sample 4 crisps are made as described in Example 1. Sample 1 crisps were made as described in Example 1 except that both the marinating step and the application of dust-on flavour were omitted. Sample 2 crisps were made as described in Example 1 except that the application of dust-on flavouring after frying was omitted. Sample 3 crisps were made as described in Example 1 except that the marination step was omitted. The crisps of Samples 2 and 4 are embodiments of the invention, whilst the crisps of Samples 1 and 3 are not in accordance with the invention and are for comparison purposes. Photographic images of crisps from samples 1 and 2 are reproduced in Fig. 1.

Samples were tasted by an expert panel. Products were scored for flavour. The results are summarised below, with reference to the Table included thereafter.

### Flavour

Comparison of Samples 1 and 2 shows that the slices are capable of taking up the flavour marinade (barbeque beef flavour), the flavour scores for the flavours incorporated by marination being significantly higher for Sample 2.

Comparing Samples 2 and 3, in terms of intensity / flavour strength, there were lower flavour notes in 2. However, it was observed that Sample 2 produced a delayed response in that the flavour (beef notes) was perceived further on in the eat, whereas in Sample 3 the flavour produced a high initial impact. This suggests that the flavour in the marinated Sample 2 is deeper in the slice, hence the delayed perception. Dust-on flavours tend to produce an instant flavour hit and lower longevity during the eat.

Therefore, with marination less dust-on flavour could be used to give the same intensity of flavour with the added benefit of a longer lasting flavour. Marination could be used as a route to provide improved flavour profile and flavour longevity during eat.

Sample 3 was compared with Sample 4. Both had the same level of dust-on meaty flavouring applied. Sample 4 produced a higher overall flavour strength perception and stronger meaty and smoky flavours. The perceived intensity of the potato flavour in Sample 4 was significantly lower than in Sample 3. Marination appears to enhance meaty and depress potato flavour - seen in Samples 2 and 4.

**Table: Flavour intensity sensory rating results**

| | | **Sample 1** | **Sample 2** | **Sample 3** | **Sample 4** |
|---|---|---|---|---|---|
| | | **Mean scores** | | | |
| **FLAVOUR** | **Savoury flavour** | 12 C | 44 B | 58 A | 59 A |
| | **Meaty/Beefy flavour** | 0 D | 29 C | 51 B | 58 A |
| | **Smoky flavour** | 4 C | 25 B | 25 B | 33 A |
| | **Onion flavour** | 0 C | 16 B | 28 A | 32 A |
| | **Potato flavour** | 53 A | 48 B | 50 B | 44 C |
| **AFTERTASTE** | **Overall aftertaste** | 32 C | 38 B | 41 B | 46 A |

### Maximum mean rating = 100

For each attribute, the difference of intensity rating between the samples is significant at least at a 95% confidence level. Samples sharing the same letter are not statistically significantly different.

### Colour - visual comparison

Marinated Sample 2 (shown on the right in Fig. 1) had a darker colour than the unmarinated Sample 1 (shown on the left in Fig. 1). The marinated sample showed a much more even colour distribution across the crisp. The colour distribution is indicative of some marinade penetration at least into the surface layer of the crisp, as predicted by the test described below carried out with a colour solution.

### Test for uptake of soluble materials

The uptake of soluble flavouring components into potato slices was simulated using an aqueous colour alone (20% solution of Carantho OF 0900 (an anthocyanin extract) from Overseal, (Naturex Company Ltd)). Slices were cut and prepared from Saturna potatoes as described in Example 1. The slices were dipped into the aqueous colour solution and were immediately fried at the end of the dip period. Dip times of 15 seconds and 2 minutes were tested, on potato slices that had been both cold- and then hot-washed. Crisps were then cut to reveal the matrix which was viewed under a microscope. The penetration of the colour solution into the crisp was determined visually in multiple randomly selected locations to obtain an estimate of the colour uptake.

In summary, viewed under x 20 magnification, after hot-washing the colour had been taken uniformly into the surface layer with a marinating time of only 15 seconds. However there was very little colour that had moved deeply into the crisp in most areas, although a few isolated areas did show some colour penetration towards the centre of the crisp, albeit with less colour intensity than at the surface. The proportion of the volume of the crisp on average taking up the colour was estimated by visual inspection to be about 25 - 35% (mostly into the surface layers).

After a marinating time of 2 minutes, there were still areas that clearly showed that the colour had not penetrated to the centre of the crisp, but in these areas the surface penetration was greater than after 15 seconds. In those partly penetrated areas, the colour was estimated to have penetrated into the crisp from both of the opposed surfaces to a depth corresponding to one quarter of the total depth of the crisp as measured between the opposed surfaces. In other areas greater penetration had occurred, such that colour had penetrated by up to about 90% or even 100% of the total depth of the crisp as measured between the opposed surfaces, although even in those areas where the penetration was 100% the colour was still lighter at the centre than at the surface. Overall the colour penetration on average was estimated to be very approximately 50 - 60% of the depth of the crisp. The marinating time of two minutes does give a greater degree of penetration, but in practice an adequate degree of penetration is achievable in, say, 5 to 15 seconds.

The test was carried out with corrugated crisps with overall thickness of 170 thousandths of an inch (4.3mm). It will be appreciated that the relative colour penetration in relation to their overall thickness will differ for different crisp configurations and dimensions. For example, the colour penetration expressed as a percentage of the crisp's volume might be expected to be greater in the case of 'standard' thinner cut crisps than for, for example, a thicker corrugated crisp.

## Claims

1. A snack product comprising a potato crisp, the potato crisp having an exterior surface defining within it a matrix and further comprising at least one flavouring component distributed within the matrix, the potato crisp having a moisture content of not more than 2.5 weight percent.

2. A snack product according to claim 1, further comprising at least one colourant distributed within the matrix of the snack product.

3. A snack product according to claim 1 or claim 2, wherein at least one said flavouring component, and/or the colourant if present, is distributed non-uniformly within the matrix of the product.

4. A snack product according to any one of the preceding claims, wherein the potato crisp is a corrugated potato crisp.

5. A snack product according to any one of the preceding claims, wherein the potato crisp is a fried potato crisp.

6. A snack product according to any one of the preceding claims, wherein the snack product comprises a flavouring adhered to the external surface, the flavouring adhered to the external surface preferably comprising a flavouring blend comprising one or more flavouring components that are not present in the matrix of the product.

7. A process for making a flavoured snack product, comprising cutting a raw potato to obtain potato pieces, contacting the potato pieces with a water-based flavouring blend to obtain flavour-containing pieces, and cooking flavour-containing pieces such that their moisture content is reduced to 2.5% by weight or less.

8. A process according to claim 7, comprising contacting the potato pieces with the water-based flavouring blend by a method selected from immersing the pieces within the water-based flavouring blend, tumbling the pieces with the water-based flavouring blend, and dripping or spraying the water-based flavouring blend onto the pieces.

9. A process according to claim 7 or claim 8, wherein the water-based flavouring blend is a solution comprising one or more flavouring components.

10. A process according to any one of claims 7 to 9 wherein the water-based flavouring blend comprises at least one dispersed particulate flavouring component.

11. A process according to any one of claims 7 to 10, wherein the potato pieces are subjected to a washing step using an aqueous wash fluid before being contacted with the water-based flavouring blend, comprising one or both of a cold water wash and a hot water wash.

12. A process according to claim 11, wherein said washing step comprises at least one water wash at a temperature of at least 40°C, preferably from 60°C to 90°C.

13. A process according to any one of claims 7 to 12, wherein the potato pieces are slices.

14. A process according to any one of claims 7 to 13, wherein the potato pieces are corrugated slices, preferably having, on their opposed cut surfaces, parallel corrugation patterns of equal pitch, the corrugations on one surface being offset relative to the corrugations on the other surface.

15. A process according to any one of claims 7 to 14, wherein said cooking comprises a frying step.
